(19)

**Europäisches Patentamt**
**European Patent Office**
**Office européen des brevets**

(11)　**EP 2 545 118 B1**

(12)　**EUROPEAN PATENT SPECIFICATION**

(45) Date of publication and mention
of the grant of the patent:
**22.03.2017　Bulletin 2017/12**

(21) Application number: **11753777.9**

(22) Date of filing: **18.02.2011**

(51) Int Cl.:
*C08F 279/02* (2006.01)　*C08L 51/04* (2006.01)
*F25D 23/06* (2006.01)

(86) International application number:
**PCT/US2011/025377**

(87) International publication number:
**WO 2011/112341 (15.09.2011 Gazette 2011/37)**

(54) **MONOVINYL AROMATIC POLYMER COMPOSITIONS WITH A NOVEL COMBINATION OF STIFFNESS AND STRESS CRACK RESISTANCE**

AROMATISCHE MONOVINYL-POLYMERZUSAMMENSETZUNGEN MIT EINER NEUEN KOMBINATION AUS STEIFHEIT UND BELASTUNGSBRUCHFESTIGKEIT

COMPOSITIONS DE POLYMÈRE MONOVINYLIQUE AROMATIQUE PRÉSENTANT UNE NOUVELLE ASSOCIATION DE RIGIDITÉ ET DE RÉSISTANCE À LA FISSURATION SOUS CONTRAINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2010　US 719078**

(43) Date of publication of application:
**16.01.2013　Bulletin 2013/03**

(73) Proprietor: **INEOS Styrolution America LLC Channahon IL 60410 (US)**

(72) Inventors:
- **COCHRAN, Thomas**
**Channahon**
**Illinois 60410 (US)**
- **CHAVEZ, Andres**
**San Antonio**
**Texas78247 (US)**

(74) Representative: **Tomkins & Co**
**5 Dartmouth Road**
**Dublin 6 (IE)**

(56) References cited:
**US-A- 4 144 204**　　**US-A1- 2002 072 570**
**US-A1- 2002 077 425**　　**US-A1- 2006 189 751**

EP 2 545 118 B1

**Description**

**BACKGROUND OF THE INVENTION**

1. Field of the Invention

The present invention is directed to impact modified styrenic polymers, and in particular to high impact modified polystyrene resins, in solid form, that exhibit an improved combination of environmental stress crack resistance and stiffness properties.

2. Description of the Prior Art

High impact polystyrene ("HIPS") is often used as a material for refrigerator liners in that it provides adequate toughness and stiffness properties. The stiffness of many HIPS materials is a limiting factor that governs the thickness of a refrigerator liner. As the stiffness of a material increases, the thinner the liner can be made, while maintaining desirable performance properties. Thinner liners save the fabricator material cost. However, environmental stress crack resistance ("ESCR") properties often becomes a problem at thinner gauges and thickness can only be reduced as long as the ESCR and toughness remain adequate. Unfortunately, in many cases, some of the product attributes that are required for high ESCR affect stiffness in a negative manner.

U.S. Patent No. 4,144,204 discloses that high ESCR HIPS can be obtained by maintaining (a) a range of gel content (rubber phase volume) of 28 to 60%; (b) a weight average rubber particle size of 4 to 10 microns; (c) a swell index above 9.5 and preferably no higher than 13; and (d) tensile stress at failure greater than 5% above the tensile strength at yield point. However, the physical properties of the resulting high ESCR material are not disclosed.

Regarding swell index, it is known that, to some extent, ESCR is improved as swell index is reduced. In many cases, swell index can be reduced for a HIPS material by heating it in an oven to cross-link the rubber. This appears to be the underlying rational for the upper swell index limit in U.S. Patent No. 4,144,204.

Bucknall et al. (Journal of Material Science, 22 (1987) 1341-1346) disclose that the stiffness (modulus) of HIPS is strongly dependent on the gel content (rubber phase volume).

U.S. Patent Nos. 6,027,800 and 6,380,305 disclose compositions that include HIPS having a gloss at 60 degrees of greater than 85% and an impact resistance of greater than 0.7 ft-Ib/inch, high density polyethylene with a density greater than or equal to about 0.94 g/cm$^3$ and a stress exponent less than or equal to about 1.70; and a compatibilizing polymer. The composition exhibits a combination of high gloss and high ESCR, measured in minutes until breakage at 1000 psi, of greater than 60.

U.S. Patent No. 5,221,136 discloses a refrigerator cabinet with a plastic liner in the inside wall of the refrigerator, which is resistant to chemical degradation by fluorocarbons.

U.S. Patent No. 6,881,767 discloses a rubber modified polystyrene composition, useful as a refrigerator liner, that includes polybutadiene particles dispersed in polystyrene. The composition is prepared by polymerizing the polybutadiene particles in the presence of styrene. The polybutadiene particles have an average volume particle diameter of 6 to 13 microns, and the composition has a gel content of 25 to 35% by weight and a degree of swelling of 13 to 22.

U.S. Patent No. 6,613,387 discloses a composition that consists of ESCR resistant HIPS formed by polymerizing styrene in the presence of polybutadiene, polyisoprene, and copolymers thereof. The HIPS impact modifier has a Mooney viscosity greater than 35 and the HIPS has a gel content of up to about 28%.

However, none of the HIPS materials cited above provide a material that is sufficiently stiff and tough while maintaining required ESCR properties at desirable thicknesses.

Thus, there is a need in the art to provide a stiffer HIPS material, with no loss in the ESCR and toughness, that would provide customers with the ability to fabricate thinner refrigerator liners thereby saving material cost.

**SUMMARY OF THE INVENTION**

The present invention is directed to a rubber modified polystyrene composition as described in claim 1. The rubber modified polystyrene composition of the invention includes the reaction product formed by polymerizing a monomer mixture containing at least 75 weight percent of one or more monovinylaromatic monomers in the presence of rubber particles to form a dispersion of rubber particles in a vinyl aromatic polymer. The dispersed rubber particles have an average particle diameter of from 6 to 10 microns. The composition has a gel content of from 28% to 36% by weight. The composition has a swell index of less than 13 and contains plasticizer in an amount of no more than 1 %, and said plasticizer consists of mineral oil.

The present invention also provides refrigerator liners containing the rubber modified polystyrene composition described above.

The present invention further provides a method of down gauging a refrigerator lining while maintaining performance characteristics as described in the claims. The method includes modifying a HIPS resin by replacing at least 50 weight percent of the rubber with a second rubber containing one or more polymers containing at least 50 weight percent of diene monomer residues.

## DESCRIPTION OF THE DRAWINGS

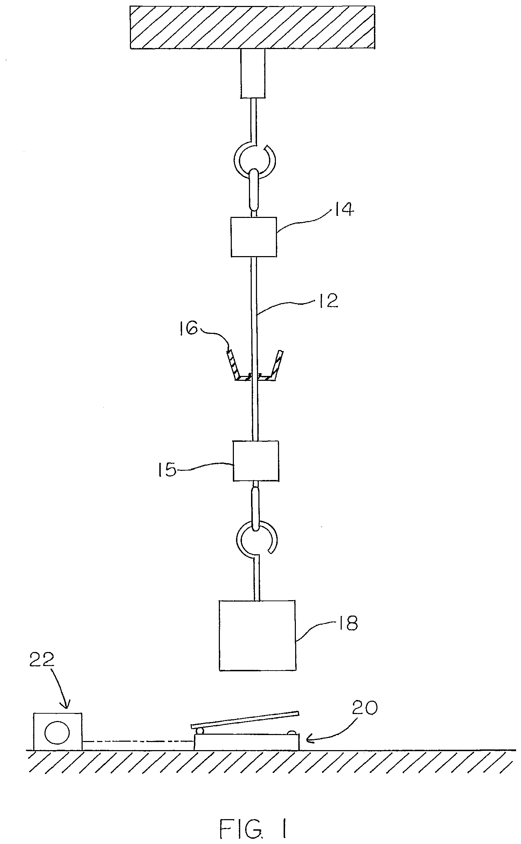

FIG. 1 is a diagram of the melt index strand ESCR apparatus used to measure the environmental stress crack resistance.

## DETAILED DESCRIPTION OF THE INVENTION

Other than in the operating examples or where otherwise indicated, all numbers or expressions referring to quantities of ingredients, reaction conditions, etc. used in the specification and claims are to be understood as modified in all instances by the term "about". Accordingly, unless indicated to the contrary, the numerical parameters set forth in the following specification and attached claims are approximations that can vary depending upon the desired properties, which the present invention desires to obtain. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical values, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between and including the recited minimum value of 1 and the recited maximum value of 10; that is, having a minimum value equal to or greater than 1 and a maximum value of equal to or less than 10. Because the disclosed numerical ranges are continuous, they include every value between the minimum and maximum values. Unless expressly indicated otherwise, the various numerical ranges specified in this application are approximations.

Unless otherwise specified, all molecular weight values are determined using gel permeation chromatography (GPC) using appropriate polystyrene standards. Unless otherwise indicated, the molecular weight values indicated herein are weight average molecular weights (Mw).

As used herein, the term "high impact polystyrene" or "HIPS" refers to rubber modified polystyrene, a non-limiting example of which includes HIPS prepared by adding polybutadiene, or other elastomeric materials, to styrene monomer during polymerization so it can become chemically bonded to the polystyrene, forming a graft copolymer which helps to incorporate impact modifying polymers into the final resin composition.

As used herein, the term "impact modifying polymer" refers to elastomeric materials that can be used to make impact modified and/or high impact polystyrene and include, without limitation, polymeric materials containing monomer residues from styrene, butadiene, isoprene, acrylonitrile, ethylene, $C_3$ to $C_{12}$ alpha olefins, and combinations thereof.

As used herein, the term "monomer residues" refers to the monomeric repeat unit in a polymer derived from addition polymerization of a molecule containing a polymerizable unsaturated group.

As used herein, the term "polymer" is meant to encompass, without limitation, homopolymers, copolymers and graft copolymers.

As used herein, the term "rubber" refers to natural and synthetic materials that deform when stress is applied and return to their original configuration when the stress is removed.

As used herein, the term "styrenic polymer" refers to a polymer that contains residues from monovinylaromatic monomers, which can include one or more monomers selected from styrene, p-methyl styrene, tertiary butyl styrene, dimethyl styrene, nuclear brominated or chlorinated derivatives thereof and combinations thereof.

The present invention provides a rubber modified polymer composition that includes the reaction product formed by polymerizing a monomer mixture that contains at least 75 wt.% of one or more monovinylaromatic monomers in the presence of rubber particles to form a dispersion of rubber particles in a vinyl aromatic polymer as described in claim 1.

In embodiments of the present invention, the vinyl aromatic polymer contains monomer residues from monovinylaromatic monomers selected from styrene, p-methyl styrene, tertiary butyl styrene, dimethyl styrene, nuclear brominated or chlorinated derivatives thereof and combinations thereof. As described herein, the particular styrenic polymer used will depend on the nature of the other components of the present rubber modified polymer composition in order to provide the desired stiffness, ESCR and toughness properties. Chain length of the styrenic polymer typically ranges from a weight average molecular weight of 150,000 to 260,000.

In order to obtain desired properties, the gel content (rubber phase volume), rubber particle size, and swell index are managed to achieve an optimal balance of stiffness, ESCR and toughness, especially when used as a refrigerator liner

While not being limited to a particular theory, it is believed that the overall modulus of a two-phase mixture, like HIPS, is a combination of the moduli of the two individual phases. The addition of plasticizers, such as mineral oil and polyisobutylene, is common for HIPS in order to improve the processability of the resin at the expense of stiffness. The components of the plasticizer partition between the polystyrene and rubber phases. This has two detrimental effects on stiffness: (a) the rubber phase volume increases and since it has the lower modulus, the modulus of the overall structure is reduced, and (b) the modulus of the phases, particularly the rubber phase is reduced. As such, an upper boundary can be placed on plasticizer content to achieve optimal stiffness.

Thus, in the present invention, it is desirable to establish an upper limit on gel content that allows for required stiffness properties, and establishing a lower limit of the gel content range to provide desired ESCR properties.

In embodiments of the invention, the rubber particles include one or more polymers containing at least 50 weight percent of diene monomer residues. As used herein, the term "diene monomer" refers to a polymerizable monomer having two polymerizable double bonds separated by a single bond. In embodiments of the invention, the diene monomer includes one or more monomers according to the formula:

$$R^1_2\text{-}C\text{=}CR^2\text{-}CR^3\text{=}CR^4_2$$

where each occurrence of $R^1$ can independently be H or a $C_1$ to $C_6$ linear or branched alkane; $R^2$ can be H or a $C_1$ to $C_3$ linear or branched alkane; $R^3$ can be H or a $C_1$ to $C_3$ linear or branched alkane; and each occurrence of $R^4$ can independently be H or a $C_1$ to $C_6$ linear or branched alkane.

In particular embodiments of the invention, the rubber particles include polybutadiene in part or can be 100% polybutadiene.

In other particular embodiments of the invention, the rubber particles can include lithium based catalyzed versions of polybutadiene, non-limiting examples being Diene™ 35, Diene 55 or Diene 70 available from Firestone Polymers, LLC; and Buna CB 380, Buna CB 550 or Buna CB 710 available from Lanxess LLC.

In other particular embodiments, the rubber particles can include co- or homopolymer of one or more $C_{4\text{-}6}$ conjugated diolefins. In some particular embodiments, the rubber particles can include polybutadiene. The polybutadiene can be a medium or high cis-polybutadiene. Typically, the high cis-polybutadiene contains not less than 90%, in some cases more than about 93 weight % of the polymer in the cis-configuration. In many instances, medium cis-polybutadiene has a cis content from about 30 to 50, in some cases from about 35 to 45 weight %. Suitable polybutadiene rubbery polymers that can be used in the invention include, but are not limited to those commercially available from a number of sources; non-limiting examples including Taktene® 550T available from Lanxess Corporation (Pittsburgh, PA); and SE PB-5800 available from the Dow Chemical Company (Midland, MI).

In particular embodiments of the invention, the rubber in the rubber modified polymer composition can include up to about 50%, in some cases less than 50%, in other cases up to 40%, in some instances up to 35% and in other instances up to about 25% by weight of the rubber in the rubber modified polymer composition of one or more other rubber materials.

When other rubber materials are used, they can include one or more block copolymers, which can be rubbery block copolymers. In some cases, the block copolymers include one or more diblock and triblock copolymers of styrene-butadiene, styrene-butadiene-styrene, styrene-isoprene, styrene-isoprene-styrene and partially hydrogenated styrene-isoprene-styrene. Examples of suitable block copolymers include, but are not limited to, the STEREON® block copolymers available from Firestone; the ASAPRENE™ block copolymers and Tufprene® elastomers available from Asahi Kasei Chemicals Corporation, Tokyo, Japan; the KRATON® block copolymers available from Kraton Polymers, Houston, Texas; and the VECTOR® block copolymers available from Dexco Polymers LP, Houston, Texas, non-limiting examples of such include Asahi's Tufprene® A, Dexco's Vector® 6241, and Kraton's D1155BJ.

In other particular embodiments of the invention, the block copolymer can be a linear or radial block copolymer.

In many embodiments of the invention, the block copolymer can have a weight average molecular weight of at least 50,000 and in some cases not less than about 75,000, and can be up to 500,000, in some cases up to 400,000 and in other cases up to 300,000. The weight average molecular weight of the block copolymer can be any value or can range between any of the values recited above.

In some embodiments of the invention, the block copolymer can be a triblock styrene-butadiene-styrene or styrene-isoprene-styrene copolymer having a weight average molecular weight of from about 175,000 to about 275,000.

In the present invention, the amount of rubber, or gel content, in the rubber modified polymer composition is at least 28%, in some cases at least about 29%, and in other cases at least about 30% and can be up to 36%, in some cases up to about 35% and in other cases up to about 34%, based on the weight of the rubber modified polymer composition. The amount of rubber in the rubber modified polymer composition can be any value or range between any of the values recited above.

To measure the gel content, the rubber modified composition is held at 280°C under nitrogen for 120 minutes to fully cross-link the rubber. It is then dissolved in toluene. Following this, the undissolved portion is separated by centrifuging and then vacuum drying the rubber. The ratio of this dry gel weight to that of the original rubber modified composition is reported in percent form as the gel content.

In the present invention, the rubber is present in the rubber modified polymer composition as dispersed discrete particles in the vinyl aromatic polymer. The weight average particle diameter of the rubber particles can be at least 6 and in some cases at least about 7 microns and can be up to 10 and in some cases up to about 9 microns. The particle diameter of the rubber in the rubber modified polymer composition can be any value or range between any of the values recited above.

In embodiments of the present invention, the rubber in the rubber modified polymer composition has a Mooney viscosity (ASTM D 1646, ML/4/100°C) of at least about 30, in come cases at least about 35 and in other cases at least about 40 and can be up to about 80, in some cases about 75, and in other cases about 70. The Mooney viscosity of the rubber modified polymer composition can be any value or range between any of the values recited above.

In embodiments of the invention, the rubber modified polymer composition has a swell index of at least one, in some cases at least about 1.5 and in other cases at least about 2 and can be up to 13, in some cases less than 13, in other cases less than about 12.5, in some situations less than about 12, in other situations less than about 11.5, in some instance less than about 11, and in other instances less than about 10. The swell index of the rubber modified polymer composition can be any value or range between any of the values recited above.

Swell index is intended to provide a measurement of the degree of cross-linking of the rubber impact modifier. To determine swell index, the rubber modified polymer composition is dissolved in toluene at 25°C. The insoluble gel constituent is separated by centrifuging and then the supernatant liquid is decanted. The remaining moist gel is weighed, dried, and then weighed again. The swell index is then reported as the ratio of the wet to dry gel. The higher the swell index, the lower the density of cross-linking in the rubber.

[0046] , Plasticizer consisting of mineral oil is included in the rubber modified polymer composition of the invention and is present in at least about 0.1, in some cases at least about 0.25 and in other cases at least about 0.5 wt. % and can be present at no more than about 1 wt. % of the rubber modified polymer composition. The amount of plasticizer present in the rubber modified polymer composition can be any value or range between any of the values recited above.

In the present invention, environmental stress crack resistance ("ESCR") can be characterized by and measured in minutes until breakage at 1000 psi. In this embodiment, the ESCR is measured with a melt index strand ESCR apparatus as shown in FIG. 1 ("MIS ESCR"). A melt index strand 12 of the material to be tested is held between strand holding clamps 14 and 15. To the bottom holding clamp 15 is attached a weight 18. The diameter of the melt index strand and the mass of the weight are chosen so that the pressure on the melt index strand is 1000 psi. Into a cup 16 affixed to the melt index strand is placed a mixture of 50% by weight cottonseed oil and 50% by weight oleic acid, and the timer 22 is started. The test proceeds until the strand 12 breaks and the weight 18 falls on the micro switch 20. This event turns off the timer 22. The elapsed time in minutes between the start and the end of the test is read off the timer, and is reported as minutes until breakage at 1000 psi.

The melt index strand ESCR apparatus and method are further described, as a non-limiting example, in U.S. Patent Nos. 6,027,800 and 6,380,305.

In the present invention, ESCR can be characterized by and measured in minutes until breakage at 1000 psi of at least about 100, in some cases at least about 102 and in other cases at least about 105 minutes.

An alternative measurement of ESCR is conducted by fixing the strain imposed on a material as opposed to the stress. In this case, two sets of specimen are held at a fixed imposed strain for a specific time. One set is exposed to a stress crack agent, while the other set (the control) is not. Physical property measurements are compared between specimens that are exposed to the stress crack agent vs. the control. Results are reported as the percent of the property value that has been retained by the exposed specimen.

$$\%\text{Retention} = [\text{physical property after chemical exposure} / \text{physical property without chemical exposure}] \times 100$$

Thus the present invention provides a rubber modified polystyrene composition that is a stiffer type of HIPS material that facilitates down gauging of sheet stock with no sacrifice in the attributes necessary for use as a refrigerator liner.

As used in the present invention, the term "stiffness" relates to the resistance of an elastic body to deformation by an applied force and can be characterized by a number of physical properties including, but not limited to, Tensile Modulus is determined according to ASTM D638 and Flexural Modulus is determined according to ASTM D790 Procedure A (standard strain rate of 0.01 min$^{-1}$) and ASTM D790 Procedure B (high strain rate of 0.1 min$^{-1}$). Unless otherwise

specified, when referring to Flexural Modulus, Procedure A (standard rate) is assumed.

In embodiments of the invention, the Tensile Modulus of the present rubber modified polystyrene composition can be at least about 218 kpsi (1,500 MPa), in some cases at least about 220 kpsi (1516 MPa), in other cases at least about 222 (1531 MPa), and in some instances at least about 225 kpsi (1550 MPa) as determined according to ASTM D638.

In embodiments of the invention, the Flexural Modulus of the present rubber modified polystyrene composition can be greater than 255 kpsi (1,758 MPa), in some cases at least about 258 kpsi (1779 MPa), in other cases at least about 260 (1793 MPa), and in some instances at least about 265 kpsi (1827 MPa) as determined according to ASTM D790 Procedure A.

In embodiments of the invention, the Flexural Modulus of the present rubber modified polystyrene composition can be greater than 268 kpsi (1,848 MPa), in some cases at least about 270 kpsi (1862 MPa), in other cases at least about 275 (1896 MPa), and in some instances at least about 280 kpsi (1930 MPa) as determined according to ASTM D790 Procedure B.

As used in the present invention, the term "toughness" represents the resistance to fracture of a material when stressed and can be characterized by a number of physical properties including, but not limited to Izod Impact, notched (ASTM D 256), Gardner Impact (ASTM D 5420), and Ultimate Elongation (ASTM D638).

In embodiments of the invention, the Izod Impact Strength, notched, at 23°C of the present rubber modified polystyrene composition can be at least 2 ft-lb/in (106 J/m), in some cases at least about 2.1 ft-lb/in (111 J/m), and in other cases at least about 2.2 ft-lb/in (117 J/m) as determined according to ASTM D 256. In other embodiments, the Izod Impact Strength, notched, at -20°C of the present rubber modified polystyrene composition can be at least 1.7 ft-lb/in (90 J/m), in some cases at least about 1.8 ft-lb/in (95 J/m), and in other cases at least about 1.9 ft-lb/in (101 J/m) as determined according to ASTM D 256.

In embodiments of the invention, the Gardner Impact Strength, at 23°C of the present rubber modified polystyrene composition can be at least 290 in-lb (31.7 J), in some cases at least about 300 in-lb (32.8 J), and in other cases at least about 305 in-lb (33.3 J) as determined according to ASTM D 5420. In other embodiments, the Gardner Impact Strength at -20°C of the present rubber modified polystyrene composition can be greater than 197 in-lb (21.5 J), in some cases at least about 198 in-lb (21.6 J), and in other cases at least about 200 (21.8 J) as determined according to ASTM D 5420.

In embodiments of the invention, when the gauge of a refrigerator lining containing the rubber modified polystyrene composition according to the invention is from 5 to 15 percent less than a refrigerator lining containing a rubber modified polystyrene of the same composition except that the plasticizer content is 2.2% and the swell index is about 12, and the flexural modulus of both liners is about the same.

When the rubber modified polystyrene composition according to the invention replaces rubber modified polystyrene materials that contain higher (greater than 2%) levels of plasticizer, only minor processing changes in the sheet extrusion die temperatures and extruder barrel temperature profile are required. The temperature changes are typically limited to small increases, in the range of 5 to 10°F, in the processing settings for the previous material. In some cases, no temperature adjustments have been required at all. In these instances, the modified polystyrene composition according to the invention behaved as an extrusion "drop-in resin" following the previously used high plasticizer containing material. In particular instances, when the preceding resin was ABS, the modified polystyrene composition according to the invention was processed at lower temperatures and requires no drying, which provided additional cost savings.

In embodiments of the invention, when the modified polystyrene composition according to the invention is used in thermoforming operations, more processing adjustments are typically required. These changes are typically due to the lower sheet thickness of the modified polystyrene composition according to the invention. Refrigerator liner producers operating using the thinner sheet according to the invention often adjust the thermoforming cycle by shortening the heating time in the oven of the thermoformers. This option increases productivity by producing more parts per hour. Typical results demonstrate cycle time reductions of up to 20%, in many cases from 5 -10%.

In other embodiments of the invention, thermoforming using the thinner sheet according to the invention is accomplished by lowering the oven temperatures and leaving most times unchanged. This method keeps the same cycle time but saves energy by using lower processing temperatures. In further embodiments of the invention, the thermoforming machine is adjusted using a combination of the approaches outlined above.

The modified polystyrene composition according to the invention provides 1) excellent processability in extrusion and thermoforming, 2) excellent lot to lot consistency, and 3) provides savings through liner thickness reductions.

A significant benefit of liner thickness reduction using the modified polystyrene composition according to the invention is the ability to manufacture the same part but with a lower weight, which translates into considerable material savings. Savings directly depend on the number of refrigerators being manufactured and on the magnitude of the liner weigh reduction. A rough volume estimate indicates that door liners represent one third of the total liner volume while cabinet liners accounts for the remaining two thirds.

The modified polystyrene composition according to the invention has successfully replaced prior art HIPS materials in the refrigeration market. Further, the modified polystyrene composition according to the invention has also been used as a replacement of ABS liners at refrigerator manufacturers that use ABS. In embodiments of the invention, using the modified polystyrene composition according to the invention as an ABS replacement provides significant savings as well. Although ABS is considered a stronger material than HIPS, only slight sheet gauge increases are required to provide equivalent performance.

The present invention will further be described by reference to the following examples. The following examples are merely illustrative of the invention and are not intended to be limiting. Unless otherwise indicated, all percentages are by weight.

**EXAMPLES**

The following test methods were used in the examples:

MIS ESCR as described above and in Fig. 1.
Melt flow rate: ASTM D1238
Tensile strength and elongation: ASTM D638
Flexural strength: ASTM D790 Procedure A or Procedure B
Notched Izod Impact: ASTM D 256
Gardner Impact: ASTM D 5490

Example 1

In the following example, the HIPS Control is a prior art rubber modified polystyrene material available as PS 2710 from INEOS NOVA LLC. This material can be characterized as having a melt flow rate of 2.9 g/10 minutes, rubber particle size of about 8 microns, a plasticizer (mineral oil) content of about 2.2%, a swell index of about 12.0, a gel content of about 32%, a weight average molecular weight of 196,800, and a Vicat softening temperature of 101 °C.

This is compared to a modified polystyrene composition according to the invention (Sample A) which is characterized as having a melt flow rate of 2.3 g/10 minutes, rubber particle size of about 8 microns, a plasticizer (mineral oil) content of about 1.0%, a swell index of about 12.6, a gel content of about 31%, a weight average molecular weight of 202,200, and a Vicat softening temperature of 103°C.

The relationship of ESCR with cross link density for the HIPS Control and Sample A is shown in the table below.

| Time in oven at 280°C (min) | HIPS Control | Sample A | |
|---|---|---|---|
| | MIS ESCR (min) | MIS ESCR (min) | Swell Index |
| 0 | 105 | 127 | 12.6 |
| 10 | 228 | 194 | 7.4 |
| 20 | 242 | 242 | 6.0 |
| 30 | 224 | 252 | 5.5 |

The data demonstrate that ESCR improves as swell index goes down (as cross-link density increases) within the range of swell index from 5 to 13.

The samples were also used to demonstrate the effect of reducing the amount of plasticizer and its effect on stiffness. The data show that the modified polystyrene composition according to the invention with reduced plasticizer level demonstrates improved stiffness without sacrificing ESCR.

The following table compares stiffness properties of the two materials. Improvement is calculated as [(sample A - HIPS Control)/HIPS Control] x 100%.

| | HIPS Control | Sample A | Improvement (%) |
|---|---|---|---|
| **ASTM Tensile** | | | |
| Tensile Modulus (Kpsi) | 217 | 227 | 5 |
| Yield Point (psi) | 2549 | 2962 | 16 |
| Fall Point (psi) | 3500 | 3897 | 11 |

(continued)

| ASTM Flexural Procedure A | | | |
|---|---|---|---|
| Flex Modulus (Kpsi) | 255 | 269 | 5 |
| Flex Strength (psi) | 5407 | 5950 | 10 |
| Flex Stress at 5% Strain (psi) | 5317 | 5884 | 11 |
| Flex Stress at Yield Point (psi) | 5397 | 5940 | 10 |
| ASTM Flexural Procedure B | | | |
| Flex Modulus (Kpsi) | 267 | 299 | 12 |
| Flex Strength (psi) | 7101 | 8081 | 14 |
| Flex Stress at 5% Strain (psi) | 6903 | 7883 | 14 |

The data demonstrate the benefit in stiffness obtained when using the modified polystyrene composition according to the invention.

The following table compares environmental stress crack resistance and tensile strength retention between the two materials.

| | HIPS Control | Sample A |
|---|---|---|
| MIS ESCR (min), 1000 psi | 105 | 127 |
| Tensile Strength Retention (%) | | |
| at 0.3% Strain | 98 | 100 |
| at 0.9% Strain | 96 | 97 |
| 0.9% Strain after 7 extruder passes at 210°C | 79 | 92 |

The data demonstrate little to no loss in ESCR was experienced using the modified polystyrene composition according to the invention and exposure to 50/50 w/w cottonseed oil/oleic acid solution. The modified polystyrene composition according to the invention performed consistently better than the prior art material. The HIPS Control and Sample A materials were extruded seven times and their respective specimens were held at 0.9% constant strain in contact with a 50/50 w/w cottonseed oil/oleic acid solution for 24 hours, results show that the invention outperformed the prior art material.

The MIS ESCR and Tensile properties retention tests were run, except HFC-245fa (pentafluoropropane refrigerant) was used in place of the 50/50 w/w cottonseed oil/oleic acid solution. The data are shown in the following table.

| | HIPS Control | Sample A |
|---|---|---|
| MIS ESCR (min), 1000 psi | >1800 | >1800 |
| Tensile Strength Retention (%) at 0.9% strain | | |
| Tensile at Yield | 101 | 98 |
| Tensile at Fail | 103 | 100 |
| Elongation (%) | 116 | 98 |

The data demonstrate little to no loss in ESCR was experienced using the modified polystyrene composition according to the invention and exposure to HFC-245fa.

The MIS ESCR test was run, except n-heptane was used in place of the 50/50 w/w cottonseed oil/oleic acid solution. The data are shown in the following table.

| | HIPS Control | Sample A |
|---|---|---|
| Flexural Strength Retention (%) | | |

(continued)

|  | HIPS Control | Sample A |
|---|---|---|
| Flex Modulus (%) | 81 | 92 |
| Flex Strength (%) | 84 | 90 |
| Flex Stress at 5% Strain (%) | 83 | 90 |

The data demonstrate higher values experienced using the modified polystyrene composition according to the invention and exposure to n-heptane.

The MIS ESCR test was run, using 50/50 w/w cottonseed oil/oleic acid solution. The data are shown in the following table.

|  | HIPS Control | Sample A |
|---|---|---|
| Flexural Strength Retention (%) |  |  |
| Flex Modulus (%) | 96 | 92 |
| Flex Strength (%) | 94 | 90 |
| Flex Stress at 5% Strain (%) | 94 | 90 |

The data demonstrate comparable values experienced using the modified polystyrene composition according to the invention and exposure to 50/50 w/w cottonseed oil/oleic acid solution.

The MIS ESCR test was run, except isopropanol was used in place of the 50/50 w/w cottonseed oil/oleic acid solution. The data are shown in the following table.

|  | HIPS Control | Sample A |
|---|---|---|
| Flexural Strength Retention (%) |  |  |
| Flex Modulus (%) | 98 | 104 |
| Flex Strength (%) | 88 | 90 |
| Flex Stress at 5% Strain (%) | 87 | 86 |

The data demonstrate similar values experienced using the modified polystyrene composition according to the invention and exposure to isopropanol.

The impact resistance was compared between modified polystyrene composition according to the invention and the prior art material. The data are shown in the following table.

|  | HIPS Control | Sample A |
|---|---|---|
| Notched Izod Impact Strength (ft-lb/in) |  |  |
| at 23°C | 2.3 | 2.2 |
| at -20°C | 1.6 | 1.9 |
| Gardner Impact Strength (in-lb) |  |  |
| at 23°C | 223 | 306 |
| at -20°C | 197 | 201 |
| Ultimate Tensile Elongation (%) |  |  |
| at 23°C | 78 | 73 |

The data demonstrate similar impact properties experienced using the modified polystyrene composition according to the invention and the prior art material.

Overall, the data show that the modified polystyrene composition according to the invention is stiffer that the prior art HIPS material and facilitates down gauging of sheet stock with no sacrifice in other necessary attributes.

Example 2

Sheet stock was formed into and used as a refrigerator liner made from the HIPS Control from Example 1. Sheet stock from Sample A was formed into and used as a refrigerator liner at a reduced thickness. The table below shows the thickness of the HIPS Control refrigerator liner and the thickness at which the liner formed from Sample A material gave equivalent performance in that particular application.

| Test No. | HIPS Control Liner Thickness (μm) | Sample A Liner Thickness (μm) | Thickness Reduction (%) |
|---|---|---|---|
| 1 | 4064 | 3632 | 10.6 |
| 2 | 4064 | 3632 | 10.6 |
| 3 | 4064 | 3632 | 10.6 |
| 4 | 1854 | 1575 | 15.1 |
| 5 | 1854 | 1575 | 15.1 |
| 6 | 1854 | 1575 | 15.1 |
| 7 | 2286 | 2032 | 11.1 |
| 8 | 2413 | 2286 | 5.3 |
| 9 | 2286 | 2032 | 11.1 |
| 10 | 2413 | 2159 | 10.5 |
| 11 | 2413 | 2286 | 5.3 |
| 12 | 2159 | 2032 | 5.9 |
| 13 | 2413 | 2286 | 5.3 |
| 14 | 4877 | 4140 | 15.1 |
| 15 | 4877 | 4140 | 15.1 |
| 16 | 2286 | 2032 | 11.1 |
| 17 | 3810 | 3556 | 6.7 |
| 18 | 2032 | 1778 | 12.5 |
| 19 | 4953 | 4699 | 5.1 |
| 20 | 4572 | 4318 | 5.6 |

The present invention has been described with reference to specific details of particular embodiments thereof. It is not intended that such details be regarded as limitations upon the scope of the invention except insofar as and to the extent that they are included in the accompanying claims.

**Claims**

1. A rubber modified polystyrene composition comprising:

a reaction product formed by polymerizing a monomer mixture comprising: at least 75 weight percent of one or more monovinylaromatic monomers in the presence of rubber particles to form a dispersion of rubber particles in a vinyl aromatic polymer;
wherein the dispersed rubber particles have an average particle diameter of from 6 to 10 microns;
wherein the composition has a gel content of from 28% to 36% by weight;
wherein the composition has a swell index of less than 13; and wherein the composition contains plasticizer in an amount of no more than 1 %, said plasticizer consisting of mineral oil.

2. The rubber modified polystyrene composition according to Claim 1, wherein the monovinylaromatic monomers are selected from the group consisting of styrene, p-methyl styrene, tertiary butyl styrene, dimethyl styrene, nuclear brominated or chlorinated derivatives thereof and combinations thereof.

3. The rubber modified polystyrene composition according to Claim 1, wherein the rubber particles comprise one or more polymers containing at least 50 weight percent of monomer residues from monomers according to the formula:

$$R^1HC=CHR^2-CHR^3=CHR^4$$

wherein $R^1$ can be H or a $C_1$ to $C_6$ linear or branched alkane, $R^2$ can be H or a $C_1$ to $C_3$ linear or branched alkane, $R^3$ can be H or a $C_1$ to $C_3$ linear or branched alkane, and $R^4$ can be H or a $C_1$ to $C_6$ linear or branched alkane; to form a dispersion of rubber particles in a vinyl aromatic polymer.

4. The rubber modified polystyrene composition according to Claim 1, having a Mooney viscosity (ML/4/100°C) of from 30 to 80.

5. The rubber modified polystyrene composition according to Claim 1, wherein the dispersed rubber particles have an average particle diameter of 7 to 9 microns.

6. The rubber modified polystyrene composition according to Claim 1, wherein the composition has a gel content of from 30% to 35% by weight; or
wherein the composition has a swell index of less than 12.

7. A refrigerator liner comprising the rubber modified polystyrene composition according to Claim 1.

8. The refrigerator lining according to Claim 7 having an MIS ESCR value of at least 100 minutes; or

having a tensile strength retention at 0.9% constant strain of at least 80%; or
having ASTM flexural modulus of $1.72 \times 10^{-3}$ to $2.07 \times 10^{-3}$ MPa (250 to 300 kpsi).

9. A refrigerator lining comprising a rubber modified polystyrene composition comprising:

the reaction product formed by polymerizing a monomer mixture comprising at least 75 wt.% of one or more monovinylaromatic monomers in the presence of rubber particles containing one or more polymers containing at least 50 weight percent of monomer residues from monomers according to the formula:

$$R^1HC=CHR^2-CHR^3=CHR^4$$

wherein $R^1$ can be H or a $C_1$ to $C_6$ linear or branched alkane, $R^2$ can be H or a $C_1$ to $C_3$ linear or branched alkane, $R^3$ can be H or a $C_1$ to $C_3$ linear or branched alkane, and $R^4$ can be H or a $C_1$ to $C_6$ linear or branched alkane; to form a dispersion of rubber particles in a vinyl aromatic polymer;
wherein the dispersed rubber particles have an average particle diameter of 6 to 10 microns;
wherein the composition has a gel content of from 28% to 36% by weight;
wherein the composition has a swell index of less than 13; and wherein the composition contains plasticizer in an amount of no more than 1%, said plasticizer consisting of mineral oil.

10. The refrigerator lining according to claim 9 having an MIS ESCR value of at least 100 minutes.

11. The refrigerator lining according to claim 9 having a tensile strength retention at 0.9% constant strain of at least 80%; or having an ASTM flexural modulus of $1.72 \times 10^{-3}$ to $2.07 \times 10^{-3}$ MPa (250 to 300 kpsi).

12. A method of down gauging a refrigerator lining while maintaining performance characteristics comprising:

modifying a rubber modified polystyrene resin by replacing at least 50 weight percent of the rubber with a second rubber containing one or more polymers containing at least 50 weight percent of monomer residues from monomers according to the formula:

$$R^1HC=CHR^2\text{-}CHR^3=CHR^4$$

wherein $R^1$ can be H or a $C_1$ to $C_6$ linear or branched alkane, $R^2$ can be H or a $C_1$ to $C_3$ linear or branched alkane, $R^3$ can be H or a $C_1$ to $C_3$ linear or branched alkane, and $R^4$ can be H or a $C_1$ to $C_6$ linear or branched alkane, to form a modified HIPS resin containing rubber particles dispersed in the polystyrene; and thermoforming the modified HIPS resin to form a refrigerator lining;

wherein the rubber particles have an average particle diameter of 6 to 10 microns;

wherein the modified HIPS resin has a gel content of from 28% to 36% by weight;

wherein modified HIPS resin has a swell index of less than 13;

wherein the modified HIPS resin contains plasticizer in an amount of no more than 1 wt.%, said plasticizer consisting of mineral oil;

wherein the gauge of the thermoformed modified HIPS resin is at least 5% less than the gauge of a thermoformed rubber modified polystyrene; and

wherein the performance properties of the thermoformed modified HIPS resin are at least equivalent to the performance properties of the thermoformed rubber modified polystyrene.

13. The method according to claim 12, wherein the modified HIPS resin has an MIS ESCR value of at least 100 minutes.

14. The method according to claim 12, wherein the modified HIPS resin has a tensile strength retention at 0.9% constant strain of at least 80%.

15. The method according to claim 12, wherein the modified HIPS resin has an ASTM flexural modulus of $1.72 \times 10^{-3}$ to $2.07 \times 10^{-3}$ MPa (250 to 300 kpsi).

## Patentansprüche

1. Gummimodifizierte Polystyrolzusammensetzung, die Folgendes aufweist:

ein Reaktionsprodukt, welches durch Polymerisieren einer Monomermischung gebildet wird, die zumindest 75 Gewichts-% von einem oder mehreren monovinylaromatischen Monomeren in Anwesenheit von Gummipartikeln aufweist, um eine Dispersion von Gummipartikeln in einem vinylaromatischen Polymer zu bilden;

wobei die dispergierten Gummipartikel einen durchschnittlichen Partikeldurchmesser von 6 bis 10 Mikrometern haben;

wobei die Zusammensetzung einen Gelgehalt von 28 bis 36 Gewichts-% hat;

wobei die Zusammensetzung einen Quellungsindex von weniger als 13 hat; und

wobei die Zusammensetzung Weichmacher in einer Menge von nicht mehr als 1 % Prozent enthält, wobei der Weichmacher aus Mineralöl besteht.

2. Gummimodifizierte Polystyrolzusammensetzung nach Anspruch 1, wobei die monovinylaromatischen Monomere aus der Gruppe ausgewählt sind, die aus Styrol, p-Methylstyrol, tertiärem Butylstyrol, Dimethylstyrol, kernbromierten oder kernchlorierten Derivaten davon und Kombinationen davon besteht.

3. Gummimodifizierte Polystyrolzusammensetzung nach Anspruch 1, wobei die Gummipartikel ein oder mehrere Polymere aufweisen, die zumindest 50 Gewichts-% Monomerreste aus Monomeren gemäß der folgenden Formel enthalten:

$$R^1HC = CHR^2\text{-} CHR^3 = CHR^4$$

wobei $R^1$ H oder ein lineares oder verzweigtes $C_1$- bis $C_6$-Alkan sein kann,

wobei $R^2$ H oder ein lineares oder verzweigtes $C_1$- bis $C_3$-Alkan sein kann,

wobei $R^3$ H oder ein lineares oder verzweigtes $C_1$- bis $C_3$-Alkan sein kann,

und wobei $R^4$ H oder ein lineares oder verzweigtes $C_1$- bis $C_6$-Alkan sein kann, um eine Dispersion von Gummipartikeln in einem vinylaromatischen Polymer zu bilden.

4. Gummimodifizierte Polystyrolzusammensetzung nach Anspruch 1, die eine Mooney-Viskosität (ML/4/100 °C) von 30 bis 80 hat.

5. Gummimodifizierte Polystyrolzusammensetzung nach Anspruch 1, wobei die dispergierten Gummipartikel einen durchschnittlichen Partikeldurchmesser von 7 bis 9 Mikrometern haben.

6. Gummimodifizierte Polystyrolzusammensetzung nach Anspruch 1, wobei die Zusammensetzung einen Gelgehalt von 30 bis 35 Gewichts-% hat; oder
wobei die Zusammensetzung einen Quellungsindex von weniger als 12 hat.

7. Kühlschrankauskleidung, welche die gummimodifizierte Polystyrolzusammensetzung nach Anspruch 1 aufweist

8. Kühlschrankauskleidung nach Anspruch 7, die einen MIS ESCR-Wert von mindestens 100 Minuten hat; oder
eine Zugfestigkeitsreserve bei 0,9 % konstanter Dehnung von mindestens 80 % hat; oder
eine ASTM-Biegesteifigkeit von $1,72 \times 10^{-3}$ bis $2,07 \times 10^{-3}$ MPa (250 bis 300 kpsi).

9. Kühlschrankauskleidung, die eine gummimodifizierte Polystyrolzusammensetzung aufweist, welche Folgendes aufweist:

ein Reaktionsprodukt, welches durch Polymerisieren einer Monomermischung erzeugt wird, die zumindest 75 Gewichts-% von einem oder mehreren monovinylaromatischen Monomeren in Anwesenheit von Gummipartikeln aufweist, die ein oder mehrere Polymere enthalten, welche zumindest 50 Gewichts-% der Monomerreste von Monomeren gemäß folgender Formel enthalten

$$R^1HC = CHR^{2-} CHR^3 = CHR^4$$

wobei $R^1$ H oder ein lineares oder verzweigtes $C_1$- bis $C_6$-Alkan sein kann,
wobei $R^2$ H oder ein lineares oder verzweigtes $C_1$- bis $C_3$-Alkan sein kann,
wobei $R^3$ H oder ein lineares oder verzweigtes $C_1$- bis $C_3$-Alkan sein kann,
und wobei $R^4$ H oder ein lineares oder verzweigtes $C_1$- bis $C_6$-Alkan sein kann, um eine Dispersion von Gummipartikeln in einem vinylaromatischen Polymer zu bilden;
wobei die dispergierten Gummipartikel einen durchschnittlichen Partikeldurchmesser von 6 bis 10 Mikrometern haben;
wobei die Zusammensetzung einen Gelgehalt von 28 bis 36 Gewichts-% hat;
wobei die Zusammensetzung einen Quellungsindex von weniger als 13 hat; und
wobei die Zusammensetzung einen Weichmacher in einer Menge von nicht mehr als 1 % Prozent enthält, wobei der Weichmacher aus Mineralöl besteht.

10. Kühlschrankauskleidung nach Anspruch 9, die einen MIS ESCR-Wert von mindestens 100 Minuten hat.

11. Kühlschrankauskleidung nach Anspruch 9, die eine Zugfestigkeitsreserve bei 0,9 % konstanter Dehnung von mindestens 80 % hat; oder
eine ASTM-Biegesteifigkeit von $1,72 \times 10^{-3}$ bis $2,07 \times 10^{-3}$ MPa (250 bis 300 kpsi) hat.

12. Verfahren zum Verdünnen einer Kühlschrankauskleidung während die Leistungscharakteristiken beibehalten werden, welches Folgendes aufweist:

Modifizieren eines gummimodifizierten Polystyrolharzes durch Ersetzen von mindestens 50 Gewichts-% des Gummis durch ein zweites Gummi, welches ein oder mehrere Polymere enthält, die zumindest 50 Gewichts-% Monomerreste von Monomeren gemäß folgender Formel enthalten:

$$R^1HC = CHR^{2-} CHR^3 = CHR^4$$

wobei $R^1$ H oder ein lineares oder verzweigtes $C_1$- bis $C_6$-Alkan sein kann,
wobei $R^2$ H oder ein lineares oder verzweigtes $C_1$- bis $C_3$-Alkan sein kann,
wobei $R^3$ H oder ein lineares oder verzweigtes $C_1$- bis $C_3$-Alkan sein kann,
und wobei $R^4$ H oder ein lineares oder verzweigtes $C_1$- bis $C_6$-Alkan sein kann, um ein modifiziertes HIPS-Harz zu formen, welches Gummipartikel enthält, die in dem Polystyrol dispergiert sind; und
Thermoformen des modifizierten HIPS-Harzes zum Formen einer Kühlschrankauskleidung; und

wobei die Gummipartikel einen durchschnittlichen Partikeldurchmesser von 6 bis 10 Mikrometern haben;

wobei das modifizierte HIPS-Harz einen Gelgehalt von 28 bis 36 Gewichts-% hat;

wobei das modifizierte HIPS-Harz einen Quellungsindex von weniger als 13 hat;

wobei das modifizierte HIPS-Harz Weichmacher in einer Menge von nicht mehr als 1 Gewichts-% enthält, wobei der Weichmacher aus Mineralöl besteht;

wobei die Dicke des thermogeformten modifizierten HIPS-Harzes zumindest 5 % geringer ist als die Dicke eines thermogeformten gummimodifizierten Polystyrols; und

wobei die Leistungseigenschaften des thermogeformten modifizierten HIPS-Harzes zumindest äquivalent mit den Leistungseigenschaften des thermogeformten gummimodifizierten Polystyrols sind.

13. Verfahren nach Anspruch 12, wobei das modifizierte HIPS-Harz einen MIS ESCR-Wert von mindestens 100 Minuten hat.

14. Verfahren nach Anspruch 12, wobei das modifizierte HIPS-Harz eine Zugfestigkeitsreserve bei 0,9 % konstanter Dehnung von mindestens 80 % hat.

15. Verfahren nach Anspruch 12, wobei das modifizierte HIPS-Harz eine ASTM-Biegesteifigkeit von 1,72 x $10^{-3}$ bis 2,07 x $10^{-3}$ MPa (250 bis 300 kpsi) hat.

**Revendications**

1. Composition de polystyrène modifiée par du caoutchouc, comprenant :

   un produit de réaction formé en polymérisant un mélange de monomères comprenant : au moins 75 pourcent en poids d'un ou plusieurs monomères monovinyliques aromatiques en présence de particules de caoutchouc pour former une dispersion de particules de caoutchouc dans un polymère vinylique aromatique ;

   dans laquelle les particules de caoutchouc dispersées ont un diamètre moyen de particule compris entre 6 et 10 micromètres ; et

   dans laquelle la composition a une teneur en gel comprise entre 28 % et 36 % en poids ;

   dans laquelle la composition a un indice de gonflement inférieur à 13 ; et

   dans laquelle la composition contient un plastifiant dans une quantité pas supérieure à 1 %, le plastifiant étant constitué d'huile minérale.

2. Composition de polystyrène modifiée par du caoutchouc selon la revendication 1, dans laquelle les monomères monovinyliques aromatiques sont sélectionnés dans le groupe constitué du styrène, du p-méthylstyrène, du butylstyrène tertiaire, du diméthylstyrène, leurs dérivés bromés ou chlorés sur le noyau, et leurs combinaisons.

3. Composition de polystyrène modifiée par du caoutchouc selon la revendication 1, dans laquelle les particules de caoutchouc comprennent un ou plusieurs polymères comprenant au moins 50 % en poids de résidus monomères provenant de monomères selon la formule :

   $$R^1HC=CHR^2\text{-}CHR^3=CHR^4$$

   où $R^1$ peut être H ou un alcane $C_1$ à $C_6$ linéaire ou ramifié, $R^2$ peut être H ou un alcane $C_1$ à $C_3$ linéaire ou ramifié, $R^3$ peut être H ou un alcane $C_1$ à $C_3$ linéaire ou ramifié, et $R^4$ peut être H ou un alcane $C_1$ à $C_6$ linéaire ou ramifié ; pour former une dispersion de particules de caoutchouc dans un polymère vinylique aromatique.

4. Composition de polystyrène modifiée par du caoutchouc selon la revendication 1, ayant une viscosité de Mooney (ML/4/100 °C) comprise entre 30 et 80.

5. Composition de polystyrène modifiée par du caoutchouc selon la revendication 1, dans laquelle les particules de caoutchouc dispersées ont un diamètre moyen de particule compris entre 7 et 9 micromètres.

6. Composition de polystyrène modifiée par du caoutchouc selon la revendication 1, dans laquelle la composition a une teneur en gel comprise entre 30 % et 35 % en poids ; ou dans laquelle la composition a un indice de gonflement inférieur à 12.

**7.** Garniture de réfrigérateur comprenant une composition de polystyrène modifiée par du caoutchouc selon la revendication 1.

**8.** Garniture de réfrigérateur selon la revendication 7 ayant une valeur MIS ESCR d'au moins 100 minutes ; ou ayant une rétention de résistance à la traction à 0,9 % de déformation constante d'au moins 80 % ; ou ayant un module de flexion ASTM de 1,72 x 10$^{-3}$ à 2,07 x 10$^{-3}$ MPa (250 à 300 kpsi).

**9.** Garniture de réfrigérateur comprenant une composition de polystyrène modifiée par du caoutchouc comprenant :

un produit de réaction formé en polymérisant un mélange de monomères comprenant au moins 75 % en poids d'un ou plusieurs monomères monovinyliques aromatiques en présence de particules de caoutchouc contenant un ou plusieurs polymères contenant au moins 50 pourcent en poids de résidus monomères provenant de monomères selon la formule :

$$R^1HC=CHR^2-CHR^3=CHR^4$$

où R$^1$ peut être H ou un alcane C$_1$ à C$_6$ linéaire ou ramifié, R$^2$ peut être H ou un alcane C$_1$ à C$_3$ linéaire ou ramifié, R$^3$ peut être H ou un alcane C$_1$ à C$_3$ linéaire ou ramifié, et R$^4$ peut être H ou un alcane C$_1$ à C$_6$ linéaire ou ramifié ; pour former une dispersion de particules de caoutchouc dans un polymère vinylique aromatique ;
dans laquelle les particules de caoutchouc dispersées ont un diamètre moyen de particule compris entre 6 et 10 micromètres ;
dans laquelle la composition a une teneur en gel comprise entre 28 % et 36 % en poids ;
dans laquelle la composition a un indice de gonflement inférieur à 13 ; et
dans laquelle la composition contient un plastifiant dans une quantité pas supérieure à 1 %, le plastifiant étant constitué d'une huile minérale.

**10.** Garniture de réfrigérateur selon la revendication 9, ayant une valeur MIS ESCR d'au moins 100 minutes.

**11.** Garniture de réfrigérateur selon la revendication 9, ayant une rétention de résistance à la traction à 0,9 % de déformation constante d'au moins 80 % ; ou ayant un module de flexion ASTM de 1,72 x 10$^{-3}$ à 2,07 x 10$^{-3}$ MPa (250 à 300 kpsi).

**12.** Procédé pour réduire le calibre d'une garniture de réfrigérateur tout en maintenant des caractéristiques de performances comprenant :

modifier une résine de polystyrène modifiée par du caoutchouc en remplaçant au moins 50 pourcent en poids du caoutchouc par un deuxième caoutchouc contenant un ou plusieurs polymères contenant au moins 50 pourcent en poids de résidus monomères provenant de monomères selon la formule :

$$R^1HC=CHR^2-CHR^3=CHR^4$$

où R$^1$ peut être H ou un alcane C$_1$ à C$_6$ linéaire ou ramifié, R$^2$ peut être H ou un alcane C$_1$ à C$_3$ linéaire ou ramifié, R$^3$ peut être H ou un alcane C$_1$ à C$_3$ linéaire ou ramifié, et R$^4$ peut être H ou un alcane C$_1$ à C$_6$ linéaire ou ramifié, pour former une résine HIPS modifiée contenant des particules de caoutchouc dispersées dans le polystyrène ; et
thermoformer la résine HIPS modifiée pour former une garniture de réfrigérateur ;
dans lequel les particules de caoutchouc ont un diamètre moyen de particule de 6 à 10 micromètres ;
dans lequel la résine HIPS modifiée a une teneur en gel comprise entre 28 % et 36 % en poids ;
dans lequel la résine HIPS modifiée a un indice de gonflement inférieur à 13 ;
dans lequel la résine HIPS modifiée contient un plastifiant dans une quantité pas supérieure à 1 % en poids, le plastifiant étant constitué d'huile minérale ;
dans lequel le calibre de la résine HIPS modifiée thermoformée est inférieur d'au moins 5 % au calibre d'un polystyrène modifié par du caoutchouc thermoformé ; et
dans lequel les propriétés de performances de la résine HIPS modifiée sont au moins équivalentes aux propriétés de performances du polystyrène modifié par du caoutchouc thermoformé.

**13.** Procédé selon la revendication 12, dans lequel la résine HIPS modifiée à une valeur MIS ESCR d'au moins 100 minutes.

**14.** Procédé selon la revendication 12, dans lequel la résine HIPS modifiée a une rétention de résistance à la traction à 0,9 % de déformation constante d'au moins 80 %.

**15.** Procédé selon la revendication 12, dans lequel la résine HIPS modifiée a un module de flexion ASTM de 1,72 x $10^{-3}$ à 2,07 x $10^{-3}$ MPa (250 à 300 kpsi).

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4144204 A
- US 6027800 A
- US 6380305 B
- US 5221136 A
- US 6881767 B
- US 6613387 B

**Non-patent literature cited in the description**

- **BUCKNALL et al.** *Journal of Material Science,* 1987, vol. 22, 1341-1346